# EUROPÄISCHE PATENTSCHRIFT

(11) **EP 2 479 123 B1**
(45) Veröffentlichungstag und Bekanntmachung des Hinweises auf die Patenterteilung: **09.04.2014**
(21) Anmeldenummer: 11194597.8
(22) Anmeldetag: 20.12.2011
(51) Int. Cl.: B65G 43/08, B65G 47/71

(54) **Vorrichtung und Verfahren zum Transport von Artikeln**
Device and method for transporting items
Dispositif et procédé destinés au transport d'articles

(30) Priorität: 21.01.2011 DE 102011009181
(43) Veröffentlichungstag der Anmeldung: 25.07.2012
(73) Patentinhaber: Krones AG, 93073 Neutraubling (DE)
(72) Erfinder: HUBER, Wolfgang, 85567 Grafing (DE)
(74) Vertreter: Benninger, Johannes

(56) Entgegenhaltungen:
- EP-A1- 1 038 808
- EP-A2- 1 767 474
- EP-A2- 2 246 277
- EP-A2- 2 364 936
- DE-A1- 19 514 928
- DE-U1- 20 214 153
- FR-A1- 2 666 315
- US-A- 3 095 960

## Beschreibung

Die vorliegende Erfindung betrifft eine Transportvorrichtung mit den Merkmalen des Anspruchs 1 sowie ein Verfahren zum Transport von Artikeln mit den Merkmalen des Anspruchs 7.

Beim Transport von Artikeln zwischen aufeinander folgenden Verarbeitungsvorrichtungen, insbesondere im Zulaufbereich von Verpackungsmaschinen, werden die Artikel oder Behälter meist im sogenannten Massenstrom befördert und vor der Übergabe an die Verpackungsmaschine in einzelne Gassen aufgeteilt. Spricht man in diesem Zusammenhang beim Transportieren von Artikeln im Massenstrom, so ist dabei ein weitgehend ungeordnetes und /oder ungruppiertes Fördern von einer Vielzahl von Artikeln auf einem Förderband oder dergleichen gemeint, wobei die Breite des Förderbands durch zwei seitliche Begrenzungsführungen sogenannte Geländerführungen parallel zur Laufrichtung der Artikel beschränkt ist. Bei der oben erwähnten Aufteilung können Störungen entstehen, bspw. wenn die Artikel bzw. Behälter nicht in der gewünschten Weise nebeneinander stehen. Umgefallene oder anders den Massenstrom blockierende Artikel können zu Störungen in der Förderung sowie auch bei nachfolgenden Behandlungsschritten führen. So werden bspw. in Getränkeproduktions- und Getränkeabfüllanlagen bereits abgefüllte oder noch leere Flaschen und Getränkebehälter in großer Vielzahl nebeneinander stehend auf Förderbändern bewegt. Hierbei können schräg stehende, umgefallene oder beschädigte Flaschen zu Störungen im Handhabungsablauf führen, so dass solche Flaschen oder Behälter nach Möglichkeit erkannt und ausgesondert werden sollten. Bei der Aufteilung des Massenstroms in Gassen kann es zudem vorkommen, dass ankommende Behälter an den Gassenblechen, welche die Gassen voneinander trennen, anstehen und / oder hängen bleiben. Dadurch wird der Gassenzulauf blockiert und es kommt bei der nachfolgenden Verarbeitungsvorrichtung wie z.B. eine Verpackungsmaschine, zu einem Mangel an Artikeln in dieser Gasse.

Bekannte Fördereinrichtungen werden bei der Behälterzuführung, bspw. zu einer Abfüllanlage, mittels einer Lichtschranke und/oder mittels mechanischen Bauteilen wie bspw. beweglichen Klappen dahingehend überwacht, dass erkannt werden kann, ob an einer vorgesehen Position ein Behälter vorhanden ist, fehlt oder umgefallen ist. Nachteilig an diesen bekannten Überwachungs- und Erfassungseinrichtungen ist, dass sie jeweils auf eine bestimmte Behältergröße abgestimmt sind und bei einem Wechsel der Behältergröße angepasst oder umgerüstet werden müssen.

Die US 43 54 865 A zeigt eine Vorrichtung, bei der automatisch umgekippte oder blockierte Artikel entfernt werden, indem ein erstes und ein zweites Signal produziert und miteinander verglichen werden. Das zweite Signal weist eine vordefinierte Länge auf, die ein normal aufrechtstehender Artikel für den Weitertransport benötigt. Bei Detektion einer Abweichung wird der Artikel aus dem Artikelstrom entfernt.

Die DE 100 07 627 A1 beschreibt ein Verfahren und eine Vorrichtung zum Ausleiten liegender Gefäße, bei der diese durch einen Sensor erkannt und mittels eines so genannten Pushers aus dem ankommenden Behälterstrom entfernt werden. Dies ist allerdings nur möglich, wenn die Flaschen nacheinander in einem Einzelstrom und nicht in einem Massenstrom heran transportiert werden.

Die DE 201 10 686 U1 offenbart weiterhin eine Vorrichtung zum Erkennen liegender Gefäße auf einem mehrspurigen Transporteur. Dabei werden Sensoren verwendet, die quer zur Transportrichtung annähernd lotrecht angeordnet sind und die liegenden Gefäße berührungslos detektieren, indem sie einen senkrecht nach unten gerichteten Energiestrahl aussenden.

Bei den beschriebenen Vorrichtungen wird insbesondere nicht darauf eingegangen, warum beispielsweise ein Behälter für die nachfolgende Vorrichtung fehlt.

Bei Artikeln mit eckigen Standflächen, aber auch bei Artikeln mit ovalen oder anderen Grundflächen kann es bei der Aufteilung eines Massenstroms in mindestens zwei getrennte Artikelströme mit Hilfe eines Gassenblechs zu Blockaden kommen, insbesondere wenn sich Artikel, die keine kreisförmige Grundfläche aufweisen, beim Transport verdreht haben. Dies passiert beispielsweise dadurch, dass sich die Artikel durch den Transport verschieben und sich ein Artikel diagonal, schräg oder aber auch direkt mittig vor bzw. am Gassenblech anordnet. Dieser Artikel - in Kombination mit den nachfolgenden Artikeln und den daraus resultierenden bzw. entstehenden Druck - blockiert dann bei der Aufteilung der Artikel in wenigstens zwei Gassen den nachfolgenden Produktstrom und es kommt zu einer Störung.

Die US 5 937 995 A zeigt eine an beiden Seiten der Förderstrecke angeordnete so genannte Schikane, die die Förderstrecke im Bereich vor der Einteilung der Artikel in Einzelströme verengt, damit die transportierten Artikel mit einer runden Grundfläche sich eng gepackt zweireihig anordnen und eine erleichterte Aufteilung in die Einzelgassen möglich ist. Diese Vorrichtung ist aber nicht dazu geeignet, verdrehte Artikel mit einer eckigen Standfläche auszurichten und eine oben beschriebene Blockade zu verhindern.

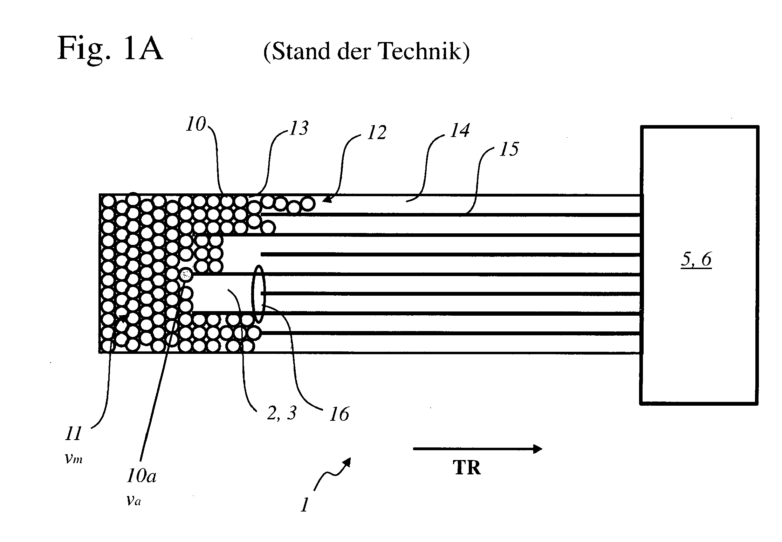

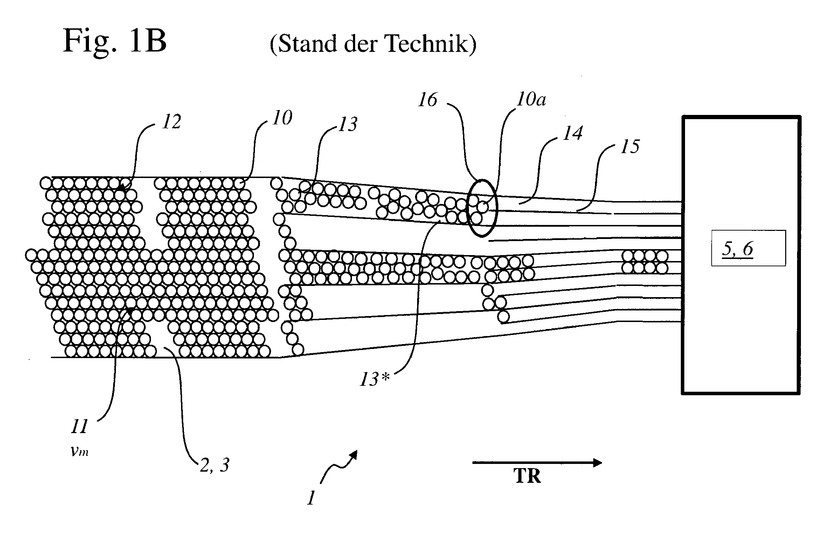

Die schematische Darstellung der Figur 1A verdeutlicht den bisher bekannten Stand der Technik einer Transportvorrichtung 1, bei der auf einer Fördereinrichtung 2, beispielsweise einem Endlosförderer 3, in Transportrichtung TR beförderte Artikel 10 im Allgemeinen stehend und zunächst ungeordnet mit einer definierten Geschwindigkeit Vₘ im Massenstrom 11 transportiert werden. Stromabwärts erfolgt zunächst eine Zuordnung der Artikel 10, beispielsweise in Dreiergassen 13, was bedeutet, dass in diesen Bereichen jeweils drei Artikel 10 nebeneinander Platz finden. Von diesen relativ kurzen Dreiergassen 13 erfolgt weiter stromabwärts eine weitere Aufteilung dieser schmaleren Artikelströme, die mittels senkrecht zur Transportebene angeordneten Trennelementen, beispielsweise Gassenblechen 15 o.ä. in Einzelgassen 14 aufgetrennt werden, wo die Artikel 10 jeweils im Einzelstrom 12 geordnet einer Weiterverarbeitungseinheit 5 wie z.B. einer Verpackungsmaschine 6 zugeführt werden. Die Neuordnung der Artikel 10 in Dreiergassen 13 und die anschließende Vereinzelung in die schmaleren Gassen 14 geschieht dabei durch eine sogenannte Verdrängelung der Artikel 10. Zunächst werden beispielsweise die Artikel 10 durch Gassenbleche 15 so abgeteilt, dass jeweils drei Artikel 10 zwischen zwei Gassenbleche 15 abgedrängt werden. Im weiteren Verlauf werden dann die nun drei senkrecht zur Transportrichtung TR nebeneinander stehenden Artikel 10 wiederum in weitere Gassen 14 abgedrängt, so dass schließlich einreihige Artikelreihen 12 gebildet werden. Bei den beschriebenen Verdrängelungsvorgängen kann es zu einem Verklemmen von Artikeln 10a im Bereich des Gassenzulaufs 16 kommen, wodurch der kontinuierliche Transport der Artikel 10 nicht mehr gewährleistet ist. Es kommt somit zu einem Mangel an Artikeln 10 an der Weiterverarbeitungseinheit 5, 6, was in der Folge zu einem Maschinenstillstand führen kann. Die schematische Darstellung der Figur 1 ist nur eine beispielhafte Ausführung der Art und Weise der Aufteilung von im Massenstrom antransportieren Artikeln 10 in einzelne Gassen 14. So ist dem Fachmann durchaus bewusst, dass die Aufteilung der im Massenstrom 11 ankommenden Artikel 10 in Gassen 14 mit einreihigen Artikeln durch verschiedene Aufteilungsgrade bzw. Aufteilungsschritte geschehen kann. So ist es auch denkbar, die Artikel 10 zunächst beispielsweise in Sechsergassen und anschließend in Dreiergassen und wiederum nachfolgend in Zweier- oder Einser (einreihig) Gassen aufzuteilen. Auch ist es denkbar die Artikel ankommend im Massenstrom direkt in einreihige Artikelgassen aufzuteilen. Die Gassenbleche 15 können als weitgehend senkrecht zur Transportebene angeordnete Trennelemente ausgebildet sein, weiterhin ist eine trichterförmige Anordnung der Trennelemente o.ä. denkbar um die gewünschte Aufteilung zu erzielen.

Das oben beschriebene Problem ist zur Verdeutlichung noch einmal in Figur 1B dargestellt. Bei dieser Ausführungsform verjüngen sich die Dreiergassen 13 zusätzlich in Transportrichtung TR. In diesem Fall werden die Artikel 10 in einem Massenstrom 12 heran transportiert und in Dreiergassen 13 aufgetrennt. Die Gassen 13 verjüngen sich in Transportrichtung TR, da die Trennelemente bzw. Gassenbleche 13* nicht parallel zueinander angeordnet sind, sondern sich in Transportrichtung TR annähern. Durch das Verjüngen der Gassen 13 entsteht ein Verdrängelungseffekt. Weiterhin werden die sich verjüngenden Gassen 13 mittels Gassenblechen 15 in wenigstens zwei weitere Gassen 14 aufgeteilt. Insbesondere im Gassenzulauf 16 kommt es zu Störungen durch den Gassenzulauf 16 blockierende Artikel 10a. Derzeit wird diese Störung durch einen manuellen Eingriff eines menschlichen Operators behoben. Der Operator wird durch entsprechende akustische und optische Signale auf die Störung aufmerksam gemacht. An dem Transporteur ermittelt der Operator zunächst die Art und den Ort der Störung. Bei einer Blockade oder einem umgefallenen Behälter (10a, 10b) wird dieser dann manuell durch den Operator entfernt und/oder richtig positioniert, so dass die nachfolgenden Artikel 10 ihre Bewegung in Transportrichtung ungehindert fortsetzen können. Maschinenbediener betreuen jedoch oftmals mehrere Maschinen gleichzeitig, wodurch es oftmals passiert, dass die Störung auf Grund der Entfernung des Bedieners zur Maschine nicht sofort oder zeitnah behoben werden kann.

Ein weiteres Problem besteht darin, dass Kunststoffbehälter nach dem Blasformen auf Grund ihres Rohmaterials eine nicht glatte Oberfläche aufweisen. Dies führt dazu, dass bei dem Transport der Kunststoffbehälter, beispielsweise im Trennbereich bzw. Zulauf einer Verpackungsmaschine, die Kunststoffbehälter aneinander haften bzw. die Kunststoffbehälter auf Grund des ungeordneten Massenstromtransports und des daraus resultierenden Drucks der Kunststoffbehälter gegeneinander, sich nicht richtig anordnen können bzw. gegenseitig abrollen. Aus diesem Grund entstehen somit im Trennbereich bzw. Zulauf beispielsweise vor einer Verpackungsmaschine Blockaden wodurch der gewünschte Transport gestoppt wird. Insbesondere spielt das Problem der Oberflächen bzw. der aneinander haftenden Kunststoffbehälter bei Anlagen eine Rolle bei welchen die einzelnen Maschinen ohne große Transportstrecken miteinander verbunden sind. Diese kompakte Aufstellung bringt mit sich, dass die Kunststoffbehälter bzw. die Zeit nach dem Blasformen bis zum Verpacken reduziert wird und somit die Behälter sich nicht ausreichen akklimatisieren können.

Ein Grund hierfür liegt möglicherweise darin, dass der Kunststoff der noch warmen, gerade geformten Artikel sich noch nicht komplett im festen Zustand befindet und somit ein leicht lösbares Verschmelzen der obersten Oberflächenschicht benachbarter Artikel stattfindet. Es ist aber auch möglich, dass die Artikel aufgrund von elektrostatischen Kräften aneinander haften. Ein weiterer Grund hierfür wäre die Zusammensetzung des Rohmaterials der Kunststoffbehälter. So kann beispielsweise ein zu hoher Anteil an Recyclat die Ursache für dieses Aneinanderhaften sein. Dies bewirkt, dass die Artikel bei der Aufteilung in die Gassen nicht oder nur schwer voneinander und/oder an der Geländerführung abrollen. Die Kombination aus mindestens zwei solcher aneinander haftender Artikel kann ebenfalls zu einer Blockade führen.

EP 1 038 808 A1 beschreibt eine Transportvorrichtung nachh dem Oberbegriff des Anspruchs 1.

Eine vorrangige Aufgabe der Erfindung besteht in einer verbesserten Erkennung von Störungen im Artikelstrom bei einer Aufteilung eines Massenstroms von Artikeln in Artikelströme von jeweils mehreren oder einzeln hintereinander transportierten Artikeln, insbesondere von Störungen durch blockierende oder umgefallene Artikel. Ggf. sollen diese Störungen nicht nur automatisch erkannt, sondern anschließend auch behoben werden können, so dass idealerweise eine Kontrolle und/oder Korrektur durch menschliche Operatoren entfallen kann.

Diese Aufgabe wird mit dem Gegenstand der unabhängigen Ansprüche gelöst. Merkmale vorteilhafter Weiterbildungen oder Ausgestaltungen der Erfindung ergeben sich aus den jeweiligen abhängigen Ansprüchen.

Zur Lösung der Aufgabe schlägt die Erfindung eine Transportvorrichtung zum Transport von Artikeln auf einer Fördereinrichtung vor. Die Fördereinrichtung kann beispielsweise ein umlaufendes Fördermittel (wie z.B. Mattenketten oder ähnlich dem Fachmann bekannte Mittel) aufweisen oder aber auch eine Aneinanderreihung von mehreren umlaufenden Fördermitteln (wie z.B. mehrere einzelne Scharnierbandketten o.ä.) sein. Die Fördereinrichtung bildet im Wesentlichen eine horizontale Förderebene. Die Aufteilung der Förderebene in einzelne Gassen erfolgt mittels meist von oben abgehängten Trennelementen, den so genannten Gassenblechen. Somit ist die Fördereinrichtung in der Regel eine Horizontalfördereinrichtung, mit der die Artikel in einem Massenstrom transportiert und in Transportrichtung mittels mindestens eines senkrecht zur Transportebene stehenden Trennelements in mindestens zwei Gassen aufgetrennt werden. Die Trennelemente bzw. Gassenbleche sind in einer bevorzugten Form oberhalb der Transportebene angeordnet und senkrecht hängend an dafür vorgesehenen Trägerkonstruktionen verstellbar fixiert. Die Gassenbleche stehen somit nicht in Kontakt mit dem Fördermittel. Die Transportvorrichtung bzw. Horizontalfördereinrichtung kann bspw. dem Transport von Artikeln von einer ersten Verarbeitungsvorrichtung zu einer zweiten Verarbeitungsvorrichtung dienen. Insbesondere bildet die Transportvorrichtung den Zulaufbereich einer Verpackungsmaschine und ist dieser somit unmittelbar vorgeordnet, da in diesem Fall meist eine Vereinzelung der Artikel in Gassen vor der weiteren Verarbeitung gewünscht / notwendig ist. So werden mit einer solchen Transportvorrichtung vorzugsweise stehende Flaschen von einer Befüllungsanlage, einer Etikettiervorrichtung o.ä. zu einer Verpackungsmaschine, einer Packstation o.ä. transportiert.

Als Trennelemente für die Aufteilung und/oder Vereinzelung der Artikel in Transportgassen für Artikelgruppen bestehend aus mehreren Artikeln bzw. in Einzelgassen dienen vorzugsweise sog. Gassenbleche oder ähnliche geeignete Mittel. Die gegen die Förderrichtung gerichteten Stirnseiten der Trennelemente, der Bereich stromaufwärts dieser Stirnseiten sowie das umgebende Areal wird im vorliegenden Zusammenhang auch als Trennbereich bezeichnet, da innerhalb dieses Bereichs ein Teil der im Zusammenhang mit der vorliegenden Erfindung interessierenden Vorgänge, Effekte und Störungen beim Auftrennen des Artikelmassenstroms auftreten können. Gemäß der vorliegenden Erfindung weist die Transportvorrichtung zumindest in dem Bereich der Auftrennung bzw. Verdrängelung der Artikel aus dem Massenstrom in Gassen und/oder Einzelgassen, d.h. in dem erwähnten Trennbereich, wenigstens eine Erfassungsvorrichtung zur Erkennung des Artikelstroms auf. Wenn im Folgenden von einer Erfassungseinrichtung die Rede ist, so sei an dieser Stelle angemerkt, dass es sich immer um wenigstens eine Erfassungseinrichtung handelt.

Die Erfassungseinrichtung ist in der Lage, in einem definierten Areal solche Artikel zu erkennen, die geeignet sind, den Transport und/oder die Weiterverarbeitung der beförderten Artikel zu stören. Der Erkennung- bzw. Erfassungsbereich der Erfassungseinrichtung ist dabei so gewählt bzw. dimensioniert, dass insbesondere Störungen im Endbereich des Massenstroms und / oder in den Aufteilungsbereichen der Artikel in Gassen erkannt werden, wobei sowohl der Bereich der Aufteilung in Gassen mit mindestens zwei Artikeln als auch der Aufteilungsbereich in Einzelgassen sowie jeweils einen ersten Teilbereich der nachfolgenden Gassen umfasst sind.

Insbesondere erkennt die Erfassungsvorrichtung Artikel, deren Transportgeschwindigkeit gegenüber der Transportgeschwindigkeit der übrigen im Massenstrom und/oder der bereits zwischen den Gassenblechen transportierten Artikel reduziert ist. Dies betrifft insbesondere solche Artikel, die aufgrund eines Kontaktes mit der Stirnseite eines der Trennelemente den Zugang zu mindestens einer Transportgasse blockieren. Dieser zwar nicht sehr häufig auftretende Effekt eines stirnseitig am Trennelement hängenden und / oder anstehenden und nicht weiterbeförderten Artikels ist jedoch umso störender, da er die daran angrenzenden Gassen weitest gehend blockieren kann. Diese störenden Artikel können mit der Erfassungseinrichtung relativ leicht gegenüber anderen Artikeln identifiziert werden, da die Transportgeschwindigkeit eines solchermaßen blockierenden Artikels annähernd oder gleich Null ist. Als weiteres Erkennungskriterium kann herangezogen werden, dass stromabwärts eines solchen als stehend erkannten Artikels aufgrund der Gassenblockade keine weiteren Artikel befördert werden, was mittels der Erfassungseinrichtung und / oder einer weiteren Erfassungseinrichtung erkannt werden kann.

Weiterhin kann es von wünschenswert sein, wenn die Erfassungsvorrichtung Artikel erkennen und identifizieren kann, deren Grundfläche von der bekannten Grundfläche eines im Massenstrom transportierten Artikels abweicht. Solche Artikel können so positioniert sein, dass die von oben erkannte Grundfläche des Artikels bzw. sein Umriss von der Grundfläche bzw. vom Umriss eines richtig positionierten Artikels abweicht. Bei solchen Objekten mit größerem Umriss bzw. größerer Grundfläche kann es sich bspw. um umgekippte, d.h. auf der Transportvorrichtung liegende Artikel oder Flaschen handeln. Je nach den Erfassungsmöglichkeiten und der gewählten Einstellung und/oder Empfindlichkeit sowie der gewählten Parameter der nachgeschalteten Auswerteeinheit kann sich dabei grundsätzlich jedoch auch um andere fehlerhafte Artikel handeln, die bspw. nicht etikettiert sind und/oder ein loses Etikett aufweisen und/oder einen abweichenden Artikeldurchmesser bzw. eine abweichende Grundfläche aufweisen. Auch ein abweichendes Reflexionsverhalten aufgrund eines fehlenden oder fehlerhaften Etiketts oder aufgrund einer Beschädigung eines Artikels kann je nach Einstellung der Erfassungseinrichtung erkannt werden.

Bei den Transport und/oder die Weiterverarbeitung störenden Artikeln handelt es sich somit meist um Artikel, die den Zugang zu den Gassen zumindest teilweise und/oder temporär blockieren, d.h. solche Artikel, deren Transportgeschwindigkeit annähernd Null ist. Wie oben erläutert, kann es sich auch um liegende Artikel handeln, deren Transportgeschwindigkeit im Allgemeinen der Transportgeschwindigkeit der übrigen im Massenstrom transportierten Artikel entspricht. Gemäß einer weiteren Ausführungsform kann die Erfassungsvorrichtung auch defekte Artikel, insbesondere beschädigte, unzureichend befüllte, falsch etikettierte Flaschen etc. erkennen.

Wird der Transport und/oder die Weiterverarbeitung durch Artikel, die den Zugang zu den Gassen zumindest teilweise und/oder temporär blockieren gestört, so macht sich dies auch durch einen Mangel an Artikeln in den nachfolgenden Gassen bemerkbar. Somit kann auch vorgesehen sein, dass die Erfassungsvorrichtung geeignet ist, einen Mangel an Artikeln in mindestens einer der dem Massenstrom nachfolgenden Gassen zu erkennen.

Um eine sichere Erkennung von störenden Artikel zu gewährleisten, ist die mindestens eine Erfassungsvorrichtung oberhalb und / oder seitlich einer Transportebene der Transportvorrichtung angeordnet.

Weiterhin umfasst die Transportvorrichtung eine Handhabungsvorrichtung zum Verschieben und/oder Blockieren und/oder zum richtigen Positionieren und/oder Entfernen dieser den Transport und/oder die Weiterverarbeitung störenden Artikel, die durch eine der wenigstens einen Erfassungsvorrichtung nachgeordnete Auswerteeinheit steuerbar ist. Die Handhabungsvorrichtung kann somit wahlweise zum Entfernen der Artikel oder zum sofortigen Beheben der Störung ohne gleichzeitige Entnahme des blockierenden oder störenden Artikels sorgen. Je nach erkanntem Störfall kann auch eine Entscheidung erfolgen, ob die Blockade ohne Entnahme des störenden Artikels behoben werden kann oder ob nur die sofortige Entnahme den ungehinderten Artikelstrom wiederherstellen kann. Die Artikelentnahme kann ggf. mit einer Rückgabe des Artikels an geeigneter Stelle stromaufwärts in den Massenstrom kombiniert werden. Insbesondere ist denkbar, dass die Rückgabe an einen stromabwärts durch die Blockade entstandenen Freiraum erfolgt. Insbesondere entfernt oder bewegt bzw. positioniert die Handhabungseinrichtung den blockierenden Artikel und entfernt somit die Störung. Alternativ kann anstelle des blockierenden Artikels ein diesem benachbarter Artikel gegriffen und anders positioniert oder entfernt werden. Es ist auch möglich dass der blockierende und mindestens ein weiterer benachbarter Artikel gegriffen und neu positioniert oder entfernt wird. Dadurch entsteht im Bereich des Gassenzulaufes eine Lücke. Durch den Druck der nachkommenden Artikel werden nachfolgende und oder der blockierende Artikel am Gassenblech abgerollt und somit in die Gasse gedrängt, wodurch die Blockade ebenfalls beseitigt wird. Dabei bezeichnet benachbarter Artikel nicht zwingend einen Artikel, der den störenden Artikel direkt berührt. Es kann sich auch um einen nicht direkt mit dem störenden Artikel in Kontakt stehenden Artikel handeln, dessen Entfernung oder Neu- Positionierung dieselbe Wirkung hervorruft.

Die wenigstens eine Erfassungsvorrichtung kann oberhalb der Transportebene oder auch seitlich der Transportvorrichtung bzw. in kombinierter Anordnung oberhalb und seitlich der Transportstrecke für die Artikel angeordnet sein. Weiterhin umfasst die Erfassungsvorrichtung mindestens einen Sensor zur Erkennung von störenden und/oder blockierenden und/oder falsch liegend beförderten Artikeln. Bei dem Sensor kann es sich bspw. um ein bilderkennendes System handeln, das einen optischen Sensor oder eine CCD-Kamera umfasst.

Gemäß einer weiteren Ausführungsform werden mehrere gleiche und / oder unterschiedliche Sensoren in der Erfassungsrichtung angeordnet. Durch die Kombination von mehreren Sensoren und die kombinierte Auswertung der ermittelten Daten ist es insbesondere möglich ein dreidimensionales Bild bzw. dreidimensionale Darstellung zu erzeugen.

Weiterhin kann es sich auch um raumerfassende Systeme mit UltraschallSensor(en), mit Radarsensor(en) oder einem oder mehreren anderen geeigneten Sensorvarianten handeln. Ultraschallsensoren können insbesondere zur Erkennung von zur Weiterverarbeitung ungeeigneten Artikeln oder Flaschen verwendet werden, da sie beispielsweise für die kontinuierliche, berührungslose Füllstandsmessung eingesetzt werden können. Weiterhin können sie der Erkennung von Rissen in der Flasche bzw. im erfassten Artikel oder anderen Beschädigungen dienen.

Die von dem Sensor bzw. der Mehrzahl von Sensoren ermittelten Informationen bzw. die von der Mehrzahl von Sensoren gelieferten Informationssignale werden über eine Auswerteeinheit, typischerweise eine Rechnereinheit, ausgewertet und die Handhabungsvorrichtung entsprechend angesteuert. Die Handhabungsvorrichtung kann somit auf Grundlage der ermittelten Lage- und Zustandsinformationen über einen störenden Artikel positioniert werden, wodurch die Störung behoben werden kann. Dies geschieht beispielsweise dadurch, dass der einen Gassenzugang blockierende Artikel oder ein benachbarter Artikel (siehe oben) entnommen und in einer Speicher- oder Aussonderungsvorrichtung abgesetzt wird. Der Artikel kann aber auch entnommen und erneut in den Massenstrom eingesetzt werden oder aber die Handhabungsvorrichtung verschiebt den Artikel auf der Transportebene vertikal und/oder horizontal zu dieser, so dass die Blockade des Gassenzugangs aufgehoben wird. Eine sinnvolle Variante der Steuerung der Handhabungsvorrichtung kann bspw. darin bestehen, dass die Handhabungsvorrichtung den Artikel gegen den Massenstrom und somit entgegen der Förderrichtung verschiebt, wodurch daran angrenzende, nachdrängelnde Artikel stromaufwärts geschoben und diese Artikel daran gehindert werden, aufgrund des plötzlich entnommenen Artikels umzukippen. Dieses Verschieben des störenden, blockierenden oder benachbarten Artikels kann ggf. auch mit einer kurzzeitigen Verzögerung oder Stopps des Vorschubs der Fördereinrichtung kombiniert werden, so dass der Staudruck durch die nachdrängenden Artikel zumindest kurzzeitig reduziert oder aufgehoben werden kann. Eine kurzzeitige Rückbewegung der Fördereinrichtung kann den gewünschten Effekt unterstützen und zu einem reibungslosen Weitertransport des aufzuteilenden Artikelstroms beitragen. Bei diesen zuletzt erwähnten Varianten ist es in aller Regel nicht erforderlich, den stirnseitig des Gassenblechs in blockierender Weise anliegenden Artikel aus dem Massenstrom zu entnehmen. Vielmehr reicht es in den meisten Fällen aus, durch eine stromaufwärts gerichtete Schiebebewegung die Blockade aufzulösen, wobei dieser stromaufwärts gerichteten Schiebebewegung des betreffenden Artikels sinnvollerweise eine seitlich zur Transportrichtung gerichtete kleine seitwärts gerichtete Bewegungskomponente überlagert sein kann.

Im Falle eines umgekippten Artikels, d.h. eines Artikels mit abweichender Grundfläche, wird dieser vorzugsweise durch die Handhabungsvorrichtung entnommen und in einer Speicher- oder Aussonderungsvorrichtung abgesetzt. Alternativ kann der Artikel durch entsprechende Drehung auch in die richtige Position gebracht und weiter stromaufwärts im ankommenden Massenstrom positioniert werden. So kann bspw. eine umgekippte Flasche durch die Handhabungsvorrichtung wieder aufgestellt und erneut in den Massenstrom eingeordnet werden. Im Falle eines defekten, beschädigten oder in anderer Weise nicht normgerechten Artikels kann dieser durch die Handhabungsvorrichtung ausgesondert werden, da er für die weitere Verarbeitung durch nachfolgende Vorrichtungen nicht geeignet ist.

Um die Artikel greifen und aufnehmen und möglichst ohne Störungen benachbarter Artikel zuverlässig aus dem Artikelstrom aufnehmen zu können, weist die Handhabungsvorrichtung mindestens ein geeignetes steuerbares Greifmittel auf. Wahlweise kann die Handhabungsvorrichtung auch mehrere unterschiedliche Greifmittel aufweisen, um ggf. mehrere störende Artikel gleichzeitig und/oder in unmittelbarer Folge an unterschiedlichen Positionen des Artikelstroms greifen und anderes positionieren oder entfernen zu können. Bei der Handhabungsvorrichtung kann es sich um einen Roboter handeln, bspw. um einen Portalroboter. Die Handhabungsvorrichtung kann jedoch auch durch einen mehrachsig steuerbaren Roboterarm mit daran angeordneter Greifvorrichtung gebildet sein. Auch können mehrere solcher Roboter vorhanden sein, die jeweils unabhängig voneinander steuerbar sein können. Es ist auch möglich, dass die Greifmittel selbst auf einer Führungsbahn beweglich angeordnet sind und mittels eines getriebelosen Direktantriebs, beispielsweise einem Linearantrieb, steuer- und fahrbar sind. Gemäß einer bevorzugten Ausführungsform weist jeder Greifer einen eigenen Antrieb auf.

Wie bereits erwähnt, kann die Steuerung der Handhabungsvorrichtung wahlweise mit einer Steuerung der Fördereinrichtung kombiniert und überlagert werden. So kann gemäß einer Ausführungsform der Erfindung in Abhängigkeit der von der Erfassungsvorrichtung gelieferten Signale der Bewegungszustand der Fördereinrichtung gesteuert werden. So kann die Transportgeschwindigkeit der Fördereinrichtung beim Erkennen eines störenden Artikels reduziert oder angehalten oder die Bewegungsrichtung der Fördereinrichtung umgekehrt werden. Die Richtungsumkehr kann insbesondere verwendet werden, um einen Artikelstau aufzulösen, der durch einen Artikel, der den Gassenzugang blockiert, verursacht wird. Beim Entfernen eines störenden Artikels aus dem Artikelstrom entsteht eine Lücke. Durch den Druck der nachfolgenden Artikel besteht die Gefahr, dass aufgrund der entstandenen Lücke weitere Artikel umfallen und somit weitere Störungen verursacht werden. Durch die gleichzeitige Änderung der Transportgeschwindigkeit und/oder durch eine kurzzeitige Richtungsumkehrung der Förderung kann dies vermieden werden. Der gewünschte Effekt kann jedoch auch dadurch erreicht werden, indem der störende oder blockierte Artikel gegen die nachdrängelnden Artikel gedrückt wird.

Um zu verhindern, dass nachfolgende, aufgestaute Artikel bei der Entnahme eines Artikels durch den Staudruck umfallen, wird der Artikel in einer definierten Bewegungsfolge entnommen. Die Bewegungsfolge bzw. der Bewegungsablauf setzt sich dabei aus mindestens zwei entgegengesetzten Bewegungskomponenten zusammen. Zuerst erfolgt ein Verschieben des zu entnehmenden Artikels in einer Richtung entgegen der Transportrichtung. Anschließend erfolgt eine Bewegung des zu entnehmenden Artikels in einer Richtung parallel zur Förderrichtung, wobei (während der Bewegung in Förderrichtung) der Artikel zusätzlich vertikal und/oder horizontal bewegt wird. Der Vorteil bei dieser Ausführungsform besteht darin, dass der Staudruck durch das Verschieben entgegen der Transportrichtung zwar kurzfristig erhöht wird, jedoch mittels der nachfolgenden Bewegung in Transportrichtung und der weiteren vertikalen und / oder horizontalen Bewegung langsam und gleichmäßig abgebaut wird. Gemäß einer bereits oben beschriebenen alternativen Ausführungsform wird nicht der blockierende Artikel selbst, sondern einen anderer - beispielsweise ein benachbarter Artikel - entnommen bzw. neu positioniert, um die Blockade aufzulösen.

Anlagen in der Getränkeindustrie werden immer kleiner und platzsparender gebaut, insbesondere werden mehrere Verarbeitungsmodule bzw. Verarbeitungsmaschinen miteinander verblockt, um eine kompakte Anordnung zu erreichen. Beispielsweise kann vorgesehen sein, dass die erfindungsgemäße Transportvorrichtung Bestandteil der nachfolgenden Verpackungsvorrichtung ist und dass die Erfassungsvorrichtung und/oder die Handhabungsvorrichtung durch die Verpackungsvorrichtung steuerbar sind. Beispielsweise erkennt die Verpackungsvorrichtung, dass zu wenige Artikel nachgeliefert werden, damit sie ihre eingestellten bzw. maximal möglichen Durchlaufzahlen erreichen kann. Die Verpackungsvorrichtung aktiviert die Erfassungsvorrichtung und/oder die Handhabungsvorrichtung, damit diese das Problem erkennen und beseitigen kann, so dass wieder Artikel in der benötigten Menge bzw. Geschwindigkeit nachgeliefert werden.

Zur Lösung der zuvor genannten Aufgabe umfasst die Erfindung weiterhin ein Verfahren zum Erkennen und Positionieren von Artikeln aus einem Artikelstrom, wobei die Artikel auf einer Transportvorrichtung in einem Massenstrom herantransportiert und in Transportrichtung mittels mindestens einen Trennelements in mindestens zwei Gassen aufgetrennt werden. Das Verfahren umfasst zumindest die folgenden Schritte: Zuerst werden den Artikelstrom oder die Weiterverarbeitung störende Artikel erfasst bzw. erkannt. Gemäß einer ersten Ausführungsform werden Artikel, deren Transportgeschwindigkeit gegenüber der Transportgeschwindigkeit der im Massenstrom transportierten Artikel reduziert ist, erkannt. Insbesondere handelt es sich hierbei um Artikel, die den Gassenzulauf und somit die Vereinzelung in die Gassen blockieren. Solche Artikel können identifiziert und von den übrigen Artikeln unterschieden werden, da ihre Transportgeschwindigkeit annähernd Null ist. Sofern weitere nachdrängelnde Artikel ebenfalls bereits durch den blockierenden Artikel in ihrer Fördergeschwindigkeit gebremst oder blockiert sind, so kann dennoch der die Blockade verursachende Artikel identifiziert werden, da er stromabwärts der vorderste stillstehende Artikel ist.

Bei dem erfindungsgemäßen Verfahren handelt es sich weiterhin um ein Verfahren, mit dem auch Artikel mit abweichender Grundfläche erkannt werden können, d.h. Artikel, deren Grundfläche von der bekannten Grundfläche eines im Massenstrom transportierten Artikels abweicht. Da die meisten transportierten Artikel keine Würfelform aufweisen, so dass sie nicht in verschiedenen Lagen jeweils identische Grundflächen haben, können umgefallene Artikel, beispielsweise liegende Flaschen, an ihrer veränderten Kontur bzw. an ihrem veränderten Grundriss identifiziert werden. Je nach Konfiguration des Verfahrens können auch defekte Artikel, insbesondere beschädigte Flaschen, unzureichend befüllte Flaschen, falsch etikettierte Flaschen etc. erkannt werden. Diese sind für die Weiterverarbeitung, beispielsweise für die Verpackung mehrerer Artikel zu einem Gebinde, ungeeignet und müssen deshalb ausgesondert werden.

Gemäß einer weiteren Ausführungsform kann das Verfahren einen Mangel an Artikeln in den Gassen erkennen. Dieser Mangel tritt auf, wenn der Transport und/oder die Weiterverarbeitung durch Artikel gestört werden, die den Zugang zu den Gassen zumindest teilweise und/oder temporär blockieren. In diesem Fall ist eine Erfassungsvorrichtung vorgesehen, die geeignet ist, einen Mangel an Artikeln in mindestens einem der dem Massenstrom nachfolgenden Gassen zu erkennen. Hierfür sind wiederum bilderkennende Systeme o.ä. geeignet.

Die beschriebenen blockierenden, umgefallenen oder defekten Artikel werden zunächst durch eine Erfassungsvorrichtung identifiziert. Die ermittelten Daten werden ausgewertet und eine Handhabungsvorrichtung wird anhand dieser Ergebnisse angesteuert, um die Störung zu beheben. Dies geschieht insbesondere durch Entfernung des störenden und/oder eines benachbarten Artikels aus dem Massenstrom oder durch eine Veränderung der Lage und/oder Position des störenden und/oder eines benachbarten Artikels, wie dies bereits im Zusammenhang mit der Transportvorrichtung ausführlich beschrieben wurde.

Weiterhin kann auf Grundlage der von der Erfassungsvorrichtung ermittelten Daten die Bewegung der Fördereinrichtung, insbesondere die Transport- bzw. Arbeitsgeschwindigkeit und/oder die Transportrichtung, gesteuert werden. Werden störende Artikel identifiziert, wird die Fördereinrichtung beispielsweise verlangsamt, angehalten oder sogar die Transportrichtung umgekehrt. Eine Richtungsumkehr kann bereits ausreichen, um die Blockade eines Gassenzulaufs zu beseitigen. Wahlweise verschiebt die Handhabungsvorrichtung während der veränderten Bewegung der Fördereinrichtung den störenden oder einen benachbarten Artikel, entnimmt ihn aus dem Artikelstrom oder positioniert den aufgenommenen Artikel neu auf dem Förderband. Nach Beseitigung der Störung nimmt die Fördereinrichtung wieder ihre normale Transport- bzw. Arbeitsgeschwindigkeit auf.

Die Erfassungsvorrichtung ermittelt insbesondere die Transportgeschwindigkeit der auf der Fördereinrichtung transportierten Artikel und vergleicht diese mit der von der Fördereinrichtung bekannten Geschwindigkeit. Dadurch können Artikel mit reduzierter Geschwindigkeit identifiziert werden, insbesondere solche, die den Zugang zu den Gassen blockieren. Die Erfassungsvorrichtung kann aber auch, optional zusätzlich zur Messung der Transportgeschwindigkeit, die Grundfläche von auf der Fördereinrichtung transportierten Artikeln erfassen und die Abweichung zu definierter / bekannter Grundfläche der richtig positionierten Artikel ermitteln. Insbesondere ist es somit möglich, stehende von liegenden Flaschen o.ä. zu unterscheiden. Weiterhin kann vorgesehen sein, dass die Erfassungsvorrichtung einen Mangel an weitertransportierten Artikeln in den Gassen erfasst, da dies ebenfalls ein Hinweis darauf ist, dass der Gassenzulauf durch falsch positionierte Artikel blockiert ist. Die Auswertung der durch die Erfassungsvorrichtung ermittelten Daten erfolgt wiederum über eine Auswerteeinheit, die die Handhabungsvorrichtung entsprechend ansteuert, damit diese die Störung entfernt.

Vorzugsweise werden die störenden Artikel über ein Greifmittel gefasst, aus dem Artikelstrom entnommen und in einer Speichervorrichtung oder einer Aussonderungsvorrichtung abgesetzt. Alternativ werden die störenden Artikel durch die Handhabungsvorrichtung auf der Fördereinrichtung in die richtige Position gebracht. Insbesondere können die den Gassenzulauf blockierenden Artikel durch eine Verschiebung auf der Transportebene senkrecht zur Transportrichtung zentral zum Gassenzulauf positioniert werden. Weiterhin ist es möglich, dass der störende oder ein benachbarter Artikel aus dem Artikelstrom entnommen, gegebenenfalls durch eine Drehung des Artikels o.ä. richtig positioniert wird. Zudem können umgefallene Artikel wieder aufgestellt und/oder entgegen der Transportrichtung transportiert und wieder auf der Fördereinrichtung in den Massenstrom eingesetzt werden.

Es sei an dieser Stelle erwähnt, dass die erfindungsgemäße Transportvorrichtung sowie das erfindungsgemäße Verfahren zum Erkennen und Positionieren von Artikeln in engem Zusammenhang mit einem Zulaufbereich einer Verpackungsmaschine gesehen werden kann. So kann die erwähnte Aufteilung eines Massenstroms durch Verdrängelung in mehrere Gassen insbesondere den Zulaufbereich einer Verpackungsmaschine bilden, wo die in Gassen geförderten Artikel einer weiteren Verarbeitungsstufe unterzogen werden, bspw. einer Förderung oder Umsetzung der Artikel in vorbereitete Verpackungseinheiten oder deren Zusammenfassung zu Gebindeeinheiten o. dgl.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt den herkömmlich bekannten Stand der Technik (Beschreibung siehe oben).
Figur 2 bis Figur 5 zeigen die Beseitigung eines blockierenden Artikels.
Figur 6 und Figur 7 zeigen die Beseitigung eines umgefallenen Artikels.
Figur 8 bis Figur 10 zeigen die Beseitigung eines fehlerhaften Artikels.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

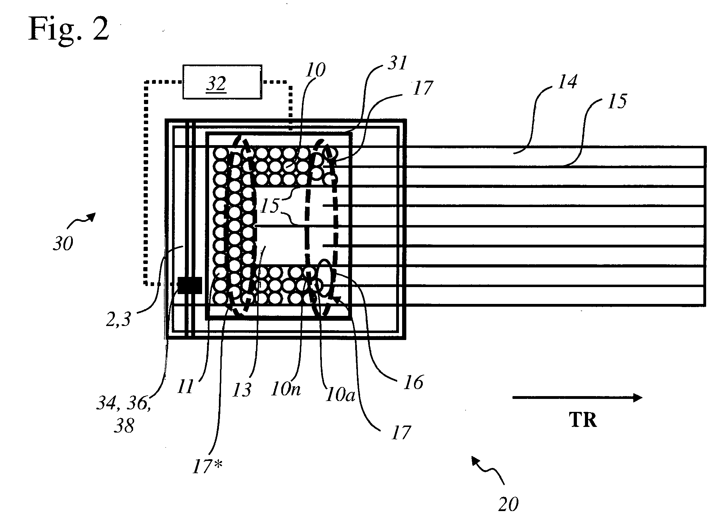

Die schematischen Darstellungen der Figuren 2 bis 5 zeigen jeweils eine erfindungsgemäße Transportvorrichtung 20, bei der eine Vielzahl von Artikeln 10, beispielsweise Flaschen, auf einer Fördereinrichtung 2, beispielsweise einem Endlosförderer 3 in einem Massenstrom 11 in Transportrichtung TR zu einem Aufteilungsbereich oder Trennbereich 17 und 17* transportiert werden, wo eine Aufteilung der Artikel 10 mittels Gassenblechen 15 zuerst in Dreiergassen 13 und anschließend in Einzelgassen 14 erfolgt. Die Aufteilung der Artikel 10 in Dreiergassen 13 und anschließend in Einzelgassen 14 ist nur als Beispiel anzusehen. Alternativ kann auch eine anfängliche Auftrennung in Vierer- Gassen, Zweier- Gassen etc. erfolgen. Die Anzahl der Artikel 10 in einer Gasse spielt für die Erfindung keine Rolle. Wesentlich ist, dass es bei der Aufteilung des Massenstroms 11 in Gassen 14 durch das Verdrängelungsprinzip zu Störungen kommen kann.

Der Transportvorrichtung 20 ist in diesem Bereich eine Erfassungsvorrichtung 30 zum Erkennen von störenden und/oder blockierenden Artikeln 10 zugeordnet, die einen Erkennung- bzw. Erfassungsbereich 31 umfasst. Innerhalb des Erkennung- bzw. Erfassungsbereich 31 werden insbesondere Störungen im Endbereich des Massenstroms 11 und in den Aufteilungsbereichen 17, 17* der Artikel in Gassen erkannt, wobei der Erkennung- bzw. Erfassungsbereich 31 sowohl den Bereich der Aufteilung 17* in Dreiergassen 13 als auch den Aufteilungsbereich 17 in Einzelgassen 14 sowie jeweils einen Teilbereich der nachfolgenden Dreier- bzw. Einzelgassen 13, 14 umfasst.

Im gezeigten Ausführungsbeispiel handelt es sich um einen den Zugang zu den Einzelgassen 14 blockierenden Artikel 10a. Die Erfassungsvorrichtung 30 weist eine geeignete Sensorik auf, welche in der Lage sein muss, eine Blockade des Gassenzugangs im Trennbereich 17 durch den Artikel 10a zu erkennen, ein entsprechendes Signal an die Auswerteeinheit 32 zu liefern, die wiederum anhand der ausgewerteten und aufbereiteten Information eine Handhabungseinrichtung 34 für den blockierenden Artikel 10a ansteuert. So können bspw. die Sensoren erfassen, dass die blockierende Flasche 10a sich nicht mehr mit der Fördereinrichtung 2, 3 mit bewegt, woraus ein entsprechendes Signal generiert wird. Oder aber die Erfassungsvorrichtung 30 weist Sensoren auf, bspw. optische Sensoren, die in der Lage sind zu erkennen, dass in einzelnen Gassen 14 keine Flaschen 10 befördert werden. Alternativ können Sensoren, insbesondere Bildverarbeitende Systeme, verwendet werden, die erkennen, dass in den Gassen 14 ein Mangel an weiter transportierten Artikeln 10 besteht, so dass eine fehlerfreie Weiterverarbeitung nicht mehr gewährleistet werden kann.

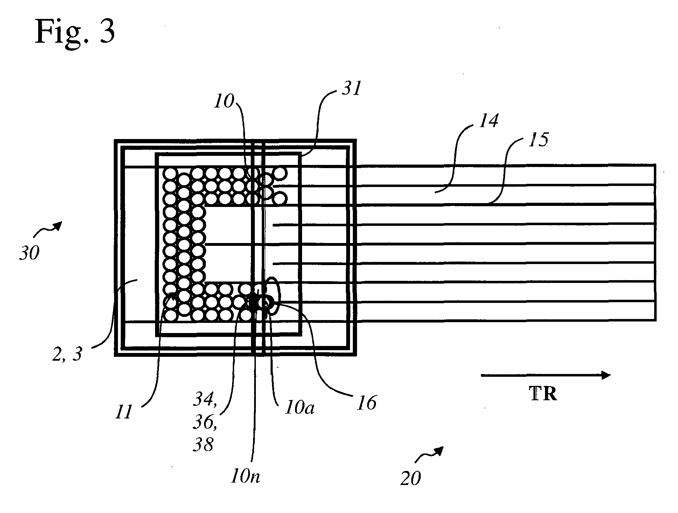

Als Handhabungseinrichtung 34 kann insbesondere ein Roboter 36 zum Einsatz kommen, beispielsweise ein Portalroboter oder ein um mehrere Achsen beweglicher Gelenkroboter o. dgl., mit einer Greifvorrichtung 38, insbesondere mit einem Flaschengreifer, einer Packtulpe o.ä. Die Handhabungseinrichtung 34 erhält die genaue Position der durch den blockierenden Artikel 10a verursachten Blockade und wird zu dieser Position bewegt, wo sie den störenden Artikel ergreift und entfernt, wie dies aus den Figuren 3 bis 5 erkennbar ist. Weiterhin kann die Handhabungseinrichtung 34 mit einem zusätzlichen Erfassungsgerät (nicht dargestellt) ausgestattet sein, um den zu greifenden, blockierenden Artikel 10a exakt zu erkennen und somit ein sicheres Greifen desselben zu gewährleisten. Normalerweise wird für ein solches zusätzliches Erfassungsgerät eine optische Erfassungseinrichtung zum Einsatz kommen, um bspw. einen liegenden Behälter richtig greifen und aufrichten zu können.

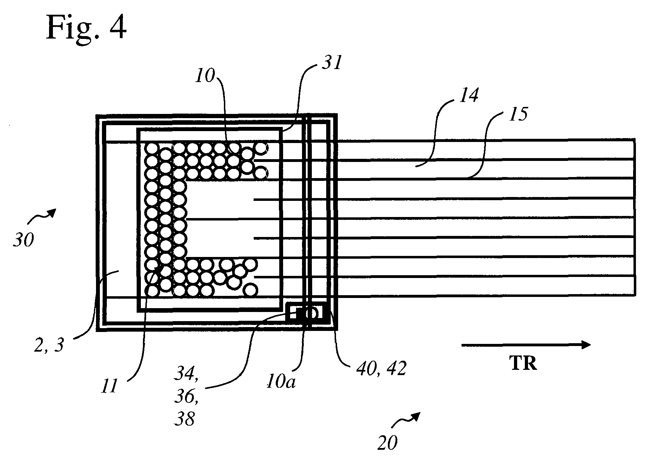

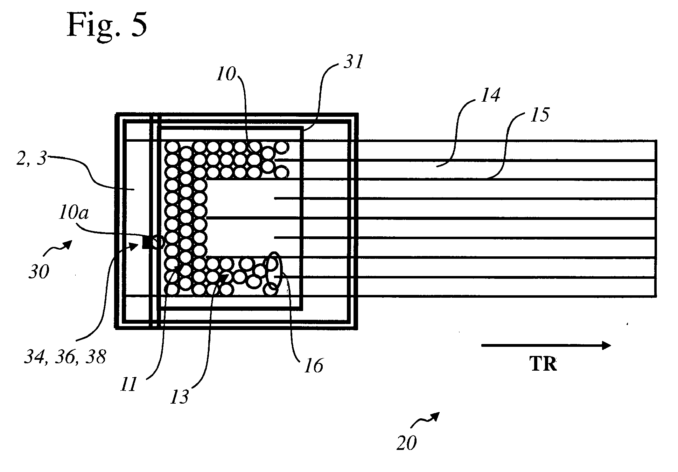

Der blockierende Artikel 10a wird von der Handhabungseinrichtung 34 gegriffen und entfernt. Dabei ist es denkbar, den Artikel 10a nach seinem Entfernen aus dem Artikelstrom bzw. Massenstrom 11 in einen Artikelspeicher 40, beispielsweise auf einem gesonderten Speicher- bzw. Sammeltisch 42 abzugeben (vgl. Figur 4). Gemäß der in Figur 5 dargestellten Ausführungsform kann der ausgesonderte Artikel 10a jedoch auch durch die Handhabungseinrichtung 34 entgegen der Transportrichtung TR transportiert und an einer anderen geeigneten Stelle auf der Fördereinrichtung 2 wieder eingesetzt werden, so dass er wieder dem Massenstrom 11 zugeführt wird und in Richtung der Gassen 13, 14 transportiert wird.

Alternativ kann anstelle des blockierenden Artikels 10a ein diesem benachbarter Artikel 10n durch die Handhabungseinrichtung 34 gegriffen, entfernt oder positioniert werden. Dadurch entsteht im Bereich des Gassenzulaufes 16 eine Lücke. Durch den Druck der nachkommenden Artikel 10 wird der blockierende Artikel 10a am Gassenblech 15 abgerollt und somit in die Einzelgasse 14 gedrängt, so dass die Blockade ebenfalls beseitigt ist. Es ist auch denkbar, dass nicht nur ein blockierender Artikel oder dem blockierendem Artikel benachbarter Artikel gegriffen, entfernt oder positioniert wird. Es kann durchaus möglich sein, dass mehrere Artikel gegriffen, entfernt oder positioniert werden um die Blockade zu beheben, um somit den gewünschten Transport der Artikel wieder herzustellen.

In den Figuren 2 bis 5 ist die Blockade durch einen Artikel 10a im Trennbereich 17 des Gassenzulaufs 16 zu den Einzelgassen 14 dargestellt. Es ist allerdings auch ohne Weiteres denkbar, dass die Blockade bereits im Trennbereich 17* des Gassenzulaufs zu den Dreiergassen 13 stattfindet.

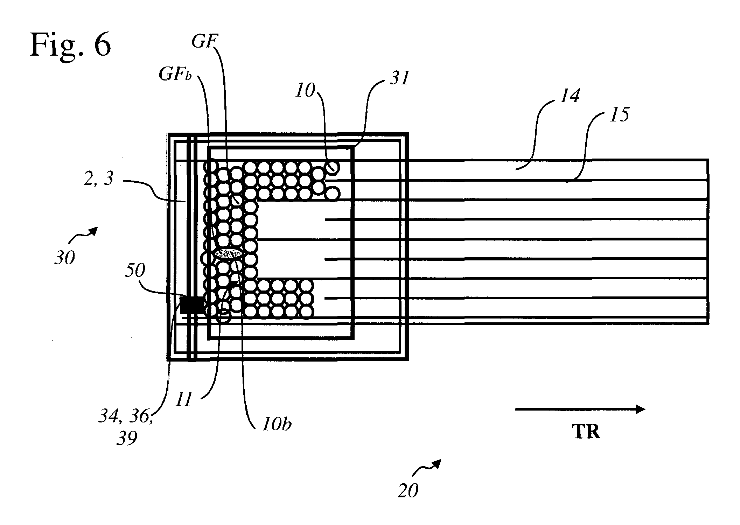

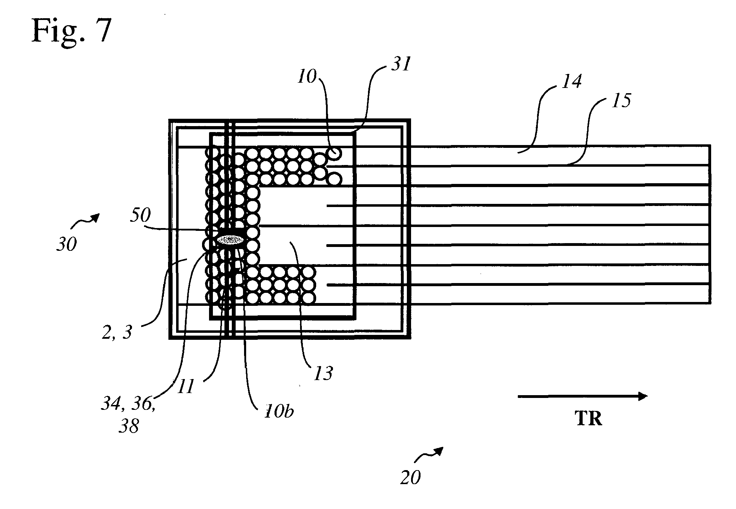

Die Figuren 6 und 7 verdeutlichen einen weiteren Aspekt der Erfindung anhand eines Ausführungsbeispiels, ähnlich der zuvor erläuterten Figuren 2 bis 5. Diese Ausführungsvariante sieht die Erkennung und Beseitigung eines umgefallenen Artikels 10b, insbesondere einer umgefallenen Flasche. Auch ein solcher Artikel, der nicht unmittelbar die Aufteilung des Massenstroms 11 behindert, kann durch die der Transportvorrichtung 20 zugeordneten Erfassungsvorrichtung 30 erkannt und mit der Handhabungseinrichtung 34 beseitigt oder wieder aufgerichtet werden. Die Erfassungsvorrichtung 30 weist zu diesem Zweck eine geeignete Sensorik und Signalauswertung auf, die anhand von bilderkennenden Systemen o.ä. die veränderte Kontur der umgekippten Flasche 10b erkennt, und gibt diese Information über eine Auswerteeinheit 32 an die Handhabungseinrichtung 34 weiter. Die Handhabungseinrichtung 34 weist eine spezielle Greifvorrichtung 39 für umgekippte Flaschen auf.

Der umgefallene Artikel 10b kann von der Handhabungseinrichtung 34 gegriffen und entfernt oder aufgestellt werden. Dabei ist es denkbar, den Artikel 10b nach seinem Entfernen in einen Artikelspeicher 40, beispielsweise auf einen gesonderten Speicher- bzw. Sammeltisch 42 abzugeben, oder aber den umgekippten Artikel 10b richtig zu positionieren, beispielsweise aufzurichten, und an einer anderen geeigneten Stelle auf der Fördereinrichtung 2 wieder einzusetzen. Hierfür weist die Greifvorrichtung 39 geeignete Mittel 50 zur Drehung und Positionierung der Artikel 10b auf (vgl. Figur 7).

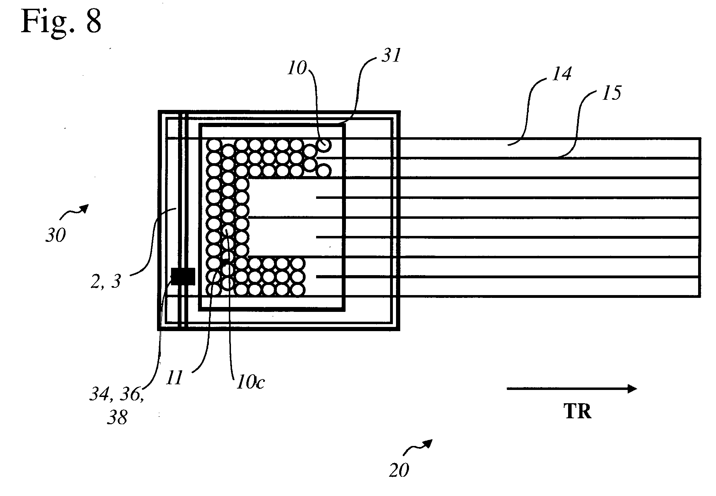

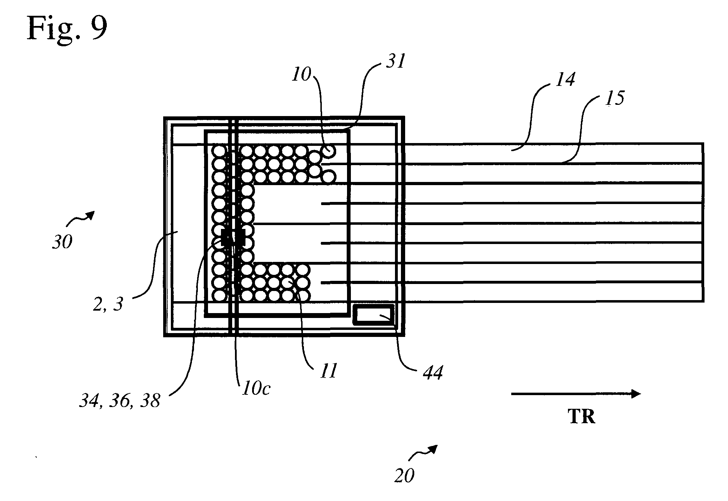

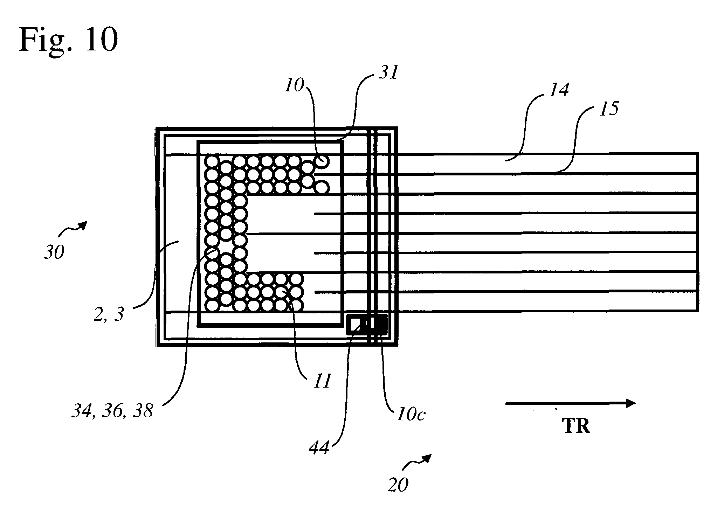

Die Figuren 8 bis 10 verdeutlichen anhand eines weiteren Ausführungsbeispiels die optionale Beseitigung eines fehlerhaften Artikels 10c. Dabei kann es sich beispielsweise um eine unvollständig befüllte Flasche, eine Flasche mit fehlerhaftem Etikett oder Aufdruck o.ä. handeln, die ausgesondert werden muss, da sie für die weitere Verarbeitung nicht geeignet ist. Der fehlerhafte Artikel 10c wird durch die Erfassungsvorrichtung 30, die auch hierfür eine geeignete Sensorik aufweist, erkannt und von der Handhabungseinrichtung 34 gegriffen und zu einem Aussonderungsbehälter 44 befördert und dort abgelegt. Dadurch kann vermieden werden, dass als fehlerhaft erkannte Artikel 10c weiteren Verarbeitungsvorrichtungen (nicht dargestellt) zugeführt und weiter bearbeitet, beispielsweise etikettiert oder zu Gebinden zusammengestellt und verpackt etc. werden. Sofern die Erfassungseinrichtung 30 die hierfür erforderliche Empfindlichkeit aufweist, kann mit Hilfe einer solchen Artikelerkennung und der damit gekoppelten Handhabungseinrichtung eine wesentliche Reduzierung einer Fehlerquote erreicht werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 1: Transportvorrichtung
- 2: Fördereinrichtung
- 3: Endlosförderer
- 5: Weiterverarbeitungseinheit
- 6: Verpackungsmaschine
- 10: Artikel
- 10a: Blockierender Artikel
- 10b: Liegender Artikel
- 10c: Defekter Artikel
- 11: Massenstrom
- 12: Einzelstrom
- 13: Dreiergasse
- 14: Gasse, Einzelgasse
- 15: Gassenblech
- 16: Gassenzulauf
- 17: Trennbereich, Aufteilungsbereich
- 17*: Trennbereich, Aufteilungsbereich
- 20: Transportvorrichtung
- 30: Erfassungsvorrichtung
- 31: Optischer Erkennungs- / Erfassungsbereich
- 32: Auswerteeinheit
- 34: Handhabungseinrichtung
- 36: Roboter
- 38: Greifvorrichtung
- 39: Greifvorrichtung
- 40: Artikelspeicher
- 42: Speichertisch
- 44: Aussonderungsbehälter
- 50: Mittel zur Drehung und Positionierung
- GF: Grundfläche eines richtig positionierten (stehenden) Artikels
- GF_{b}: Grundfläche eines falsch positionierten (liegenden) Artikels
- Vₐ: Transportgeschwindigkeit eines blockierenden Artikels
- V_{F}: Transportgeschwindigkeit der Fördereinrichtung
- Vₘ: Transportgeschwindigkeit der Artikel im Massenstrom

## Patentansprüche

1. Transportvorrichtung (1) zum Transport von Artikeln (10) in einem Massenstrom (11) in Richtung wenigstens eines Trennelements (15) zur Aufteilung des Massenstroms (11) in wenigstens zwei Gassen (13, 14), wobei das Trennelement (15) Teil der Transportvorrichtung ist und wobei der Transportvorrichtung (1) zumindest in einem Trennbereich (17, 17*) mindestens eine Erfassungsvorrichtung (30) zur Erkennung von Artikeln (10a), deren Transportgeschwindigkeit (vₐ) gegenüber der Transportgeschwindigkeit (vₘ) der im Massenstrom (11) transportierten Artikel (10) reduziert ist und/oder zur Erkennung von Artikeln (10b), deren Grundfläche (GF_{b}) von einer bekannten Grundfläche (GF) eines im Massenstrom (11) transportierten Artikels (10) abweicht und/oder zur Erkennung eines Mangels an Artikeln in mindestens einer Gasse (13, 14) zugeordnet ist, die mit einer Handhabungsvorrichtung (34) zum Positionieren und/oder Entfernen von durch die Erfassungseinrichtung (30) identifizierten Artikeln (10a, 10b) oder benachbarten Artikeln (10n) gekoppelt ist, wobei die Handhabungsvorrichtung (34) Teil der Transportvorrichtung ist, **dadurch gekennzeichnet, dass** die Handhabungsvorrichtung (34) steuerbare Greifmittel (38, 39) für Artikeln (10a, 10b, 10n) mit reduzierter Transportgeschwindigkeit (vₐ) umfasst, wobei die Transportvorrichtung eine Auswerteeinheit (32) aufweist, um die steuerbaren Greifmittel (38, 39) auf der Transportebene entgegen oder weitgehend senkrecht zur Transportrichtung (TR) zu bewegen.

2. Transportvorrichtung nach Anspruch 1, bei der die wenigstens eine Erfassungsvorrichtung (30) oberhalb und / oder seitlich einer Transportebene der Transportvorrichtung (1) angeordnet ist.

3. Transportvorrichtung nach Anspruch 1 oder 2, bei der die Erfassungsvorrichtung (30) mindestens einen Sensor zur Erkennung von Artikeln (10a) mit reduzierter Transportgeschwindigkeit (vₐ) und/oder zur Erkennung von Artikeln (10b), deren Grundfläche (GF_{b}) von der bekannten Grundfläche (GF) eines im Massenstrom (11) transportierten Artikels (10) abweicht und/oder zur Erkennung eines Mangels an Artikeln in mindestens einer Gasse (13, 14) umfasst.

4. Transportvorrichtung nach einem der Ansprüche 1 bis 3, bei der die Handhabungsvorrichtung (34) mindestens ein Greifmittel (38, 39) für die Artikel (10a) mit reduzierter Transportgeschwindigkeit (vₐ) und/oder für die Artikel (10b), deren Grundfläche (GF_{b}) von der bekannten Grundfläche (GF) eines im Massenstrom (11) transportierten Artikels (10) abweicht und/oder von dazu benachbarten Artikeln (10n) aufweist.

5. Transportvorrichtung nach einem der Ansprüche 1 bis 4, bei der die Handhabungsvorrichtung (34) durch einen Roboter, insbesondere durch einen Portalroboter, gebildet ist.

6. Transportvorrichtung nach einem der Ansprüche 1 bis 5, wobei die Erfassungsvorrichtung (30) mit einer Auswerteeinheit (32) zur Steuerung und/oder Beeinflussung des Bewegungszustandes der Fördereinrichtung (2, 3) gekoppelt ist.

7. Verfahren zum Erkennen und Positionieren von Artikeln (10), die auf einer Transportvorrichtung (1) nach Anspruch 1 in einem Massenstrom (11) befördert und in Transportrichtung (TR) mittels mindestens eines Trennelementes (15) in mindestens zwei Gassen (13, 14) aufgetrennt werden, umfassend zumindest die folgenden Schritte:
• Erkennen von Artikeln (10a) deren Transportgeschwindigkeit (vₐ) gegenüber der Transportgeschwindigkeit (vₘ) der im Massenstrom (11) transportierten Artikel (10) reduziert ist durch eine Erfassungsvorrichtung (30) und/oder
• Erkennen von Artikeln (10b) deren Grundfläche (GF_{b}) von der bekannten Grundfläche (GF) eines im Massenstrom (11) transportierten Artikels (10) abweicht durch eine Erfassungsvorrichtung (30) und/oder
• Erkennen eines Mangels an Artikeln (10) in mindestens einer Gasse (13, 14) durch eine Erfassungsvorrichtung (30),
• Auswertung der ermittelten Daten,
• Ansteuerung einer Handhabungsvorrichtung (34) zum Positionieren und/oder Entfernen der mittels der Erfassungsvorrichtung (30) identifizierten Artikel (10a, 10b) oder benachbarter Artikel (10n),
• Entfernung dieser Artikel (10a, 10b, 10n) aus dem Massenstrom (11) oder
• Veränderung der Lage und/oder Position dieser Artikel (10a, 10b, 10n).

8. Verfahren nach Anspruch 7, bei dem die Transportgeschwindigkeit (v_{F}) einer Fördereinrichtung (2, 3) beim Erkennen eines Artikels (10a) mit reduzierter Transportgeschwindigkeit (vₐ) und/oder beim Erkennen eines Artikels (10b), dessen Grundfläche (GF_{b}) von der bekannten Grundfläche (GF) eines im Massenstrom (11) transportierten Artikels (10) abweicht, und/oder beim Erkennen eines Mangels an Artikeln (10) in mindestens einer nachfolgenden Gasse (13, 14) durch die Erfassungsvorrichtung (30) gesteuert und/oder verändert wird.

9. Verfahren nach Anspruch 7 oder 8, bei dem die Transportgeschwindigkeit (v_{F}) der Fördereinrichtung (2, 3) beim Erkennen eines Artikels (10a) mit reduzierter Transportgeschwindigkeit (vₐ) und/oder beim Erkennen eines Artikels (10b), dessen Grundfläche (GF_{b}) von der bekannten Grundfläche (GF) eines im Massenstrom (11) transportierten Artikels (10) abweicht, und/oder beim Erkennen eines Mangels an Artikeln (10) in mindestens einer nachfolgenden Gasse (13, 14) reduziert wird, so dass die Bewegung der Fördereinrichtung (2,3) verlangsamt oder angehalten wird oder ein Richtungswechsel erfolgt, und wobei die Bewegung der Fördereinrichtung (2, 3) nach Beseitigung der Störung wieder in normaler Transportgeschwindigkeit (v_{F}) aufgenommen wird.

10. Verfahren nach einem der Ansprüche 7 bis 9, bei dem die Erfassungsvorrichtung (30) die Transportgeschwindigkeit (vₘ, vₐ) von auf der Fördereinrichtung (2, 3) herantransportierten Artikeln (10, 10a) und/oder die Grundfläche (GF, GF_{b}) der Artikel (10, 10a, 10b) und/oder den Mangel an Artikeln (10) in mindestens einer nachfolgenden Gasse (13, 14) erfasst und die Abweichung zur bekannten definierten Transportgeschwindigkeit (vₘ, v_{F}) und/oder zur bekannten definierten Grundfläche (GF, GFₐ) und/oder den blockierenden Artikel (10a) ermittelt und die Handhabungsvorrichtung (34) entsprechend ansteuert.

11. Verfahren nach einem der Ansprüche 7 bis 10, bei dem der Artikel (10a) mit reduzierter Transportgeschwindigkeit (vₐ) und/oder der Artikel (10b), dessen Grundfläche (GF_{b}) von der bekannten Grundfläche (GF) eines im Massenstrom (11) transportierten Artikels (10) abweicht und/oder der den Gassenzulauf (16) blockierenden Artikel (10a) und/oder ein benachbarter Artikel (10n), aus dem Artikelstrom entnommen und in einer Speichervorrichtung (40, 42) oder einer Aussonderungsvorrichtung (44) abgesetzt wird.

12. Verfahren nach einem der Ansprüche 7 bis 10, bei dem der Artikel (10a) mit reduzierter Transportgeschwindigkeit (vₐ) und/oder der Artikel (10b), dessen Grundfläche (GF_{b}) von der bekannten Grundfläche (GF) eines im Massenstrom (11) transportierten Artikels (10) abweicht und/oder der den Gassenzulauf (16) blockierenden Artikel (10a) und/oder ein benachbarter Artikel (10n), aus dem Artikelstrom entnommen und/oder in richtige Position gebracht und/oder entgegen der Transportrichtung (TR) transportiert und wieder auf der Fördereinrichtung (2, 3) in den Massenstrom (12) eingesetzt wird.

13. Verfahren nach einem der Ansprüche 7 bis 10, bei dem ein Artikel (10a) und/oder ein benachbarter Artikel (10n) mit reduzierter Transportgeschwindigkeit (vₐ) durch die Handhabungsvorrichtung (34) vertikal und/oder horizontal zur Transportrichtung (TR) auf der Transportebene der Fördereinrichtung (2, 3) verschoben wird, um den Artikel (10a, 10n) weitgehend zentral zum Gassenzulauf (16) der Gasse (13, 14) anzuordnen.

## Claims

1. Transport device (1) for transporting articles (10) in a mass flow (11) in the direction of at least one separating element (15) for dividing the mass flow (11) into at least two lanes (13, 14), wherein the separating element (15) is a part of the transport device and wherein the transporting device (1) comprises at least one detection device (30) associated with at least one separating area (17, 17*) for the detection of articles (10a), the transport speed (vₐ) of the detected articles (10a) being reduced with respect to the transport speed (vₘ) of the articles (10) transported within the mass flow (11) and / or for the detection of articles (10b) whose base area (GF_{b}) differs from a known base area (GF) of an article (10) transported within the mass flow (11) and / or for the detection a lack of articles in at least one lane (13, 14), which is coupled to a handling device (34) for positioning and / or removal of articles (10a, 10b) identified by the detection device (30) or adjacent articles (10n), wherein the handling device (34) is part of the transport device **characterized in that** the handling device (34) comprises controllable gripping means (38, 39) for articles (10a, 10b, 10n) with a reduced transport speed (vₐ), wherein the transport device comprises an evaluation unit, to move the controllable gripping means (38, 39) on the transport plane opposite or substantially perpendicular to the transport direction (TR).

2. Transport device according to claim 1, wherein the at least one detection device (30) is arranged above and / or to the side of a conveying plane of the transport device.

3. Transport device according to claim 1 or 2, wherein the detection device (30) comprises at least one sensor for the detection of articles (10a) with a reduced transport speed (vₐ) and / or for the detection of articles (10b) whose base area (GF_{b}) differs from a known base area (GF) of an article (10) transported within the mass flow (11) and / or for the detection of the lack of articles in at least one lane (13, 14).

4. Transport device according to claim 1 to 3, wherein the handling device (34) comprises at least one gripping means (38, 39) for articles (10a) with a reduced transport speed (vₐ) and / or for articles (10b) whose base area (GF_{b}) differs from a known base area (GF) of an article (10) transported within the mass flow (11) and / or for articles (10n) adjacent thereto.

5. Transport device according to claim 1 to 4, wherein the handling device (34) is formed by a robot, in particular by a gantry robot.

6. Transport device according to claim 1 to 5, wherein the detection device (30) is coupled to an evaluation unit (32) for controlling and / or influencing the state of movement of the conveyor device (2, 3).

7. Method for recognizing and positioning of articles (10), transported on a transport device (1) according to claim 1 in a mass flow (11) and separated into at least two lanes (13, 14) in the transport direction (TR) by means of at least one separating element (15), comprising at least the following steps:
• detection of articles (10a) having a reduced transport speed (vₐ) with respect to the transport speed (vₘ) of the articles (10) transported within the mass flow (11) by a detection device (30) and / or
• detection of articles (10b) whose base area (GF_{b}) differs from a known base area (GF) of an article (10) transported within the mass flow (11) by a detection device (30) and / or
• detection of a lack of articles (10) in at least one lane (13, 14) by a detection device (30),
• evaluation of the obtained data,
• control of a handling device (34) for positioning and / or removal of articles (10a, 10b) identified by the detection device (30) or adjacent articles (10n),
• removal of these articles (10a, 10b, 10n) from the mass flow (11) or
• changing the location and / or position of these article (10a, 10b, 10n).

8. Method according to claim 7, in which the transport speed (v_{F}) of a conveying device is controlled and / or modified by the detection device (30) when an article (10a) with reduced transport speed (vₐ) is detected and / or when an article is detected whose base area (GF_{b}) differs from a known base area (GF) of an article (10) transported within the mass flow (11) and / or when a lack of articles (10) is detected in at least one subsequent lane (13, 14).

9. Method according to claim 7 or 8, whereby the transport speed (v_{F}) of the conveyor device (2, 3) is reduced when an article (10a) with reduced transport speed (vₐ) is detected and / or when an article is detected whose base area (GF_{b}) differs from a known base area (GF) of an article (10) transported within the mass flow (11) and / or when a lack of articles (10) is detected in at least one subsequent lane (13, 14), so that the movement of the conveyor device (2,3) is slowed or stopped or a change in direction occurs, and wherein the movement of the conveyor device (2, 3) is restarted in a normal transport speed (v_{F}) after removal of the disturbance.

10. Method according to one of the claims 7 to 9, wherein the detection device (30) detects the transport speed (vₘ, vₐ) of articles (10, 10a) transported on the conveyor device (2, 3) and / or the base area (GF, GF_{b}) of the articles (10, 10a, 10b) and / or a lack of articles (10) in at least one subsequent lane (13, 14) and determines the deviation from the known defined transport speed (vₘ, v_{F}) and / or from the known defined base area (GF, GFₐ) and / or determines the blocking article (10a) and controls the handling device (34) correspondingly.

11. Method according to one of the claims 7 to 10, wherein the article (10a) with reduced transport speed (vₐ) and / or the article (10b) whose base area (GF_{b}) differs from a known base area (GF) of an article (10) transported within the mass flow (11) and / or the article (10a) blocking the infeed area (16) of the lanes and / or an adjacent article (10n) is removed from the article stream and deposited in a storage device (40, 42) or a separating device (44).

12. Method according to one of the claims 7 to 10, wherein the article (10a) with reduced transport speed (va) and / or the article (10b) whose base area (GFb) differs from a known base area (GF) of an article (10) transported within the mass flow (11) and / or the article (10a) blocking the infeed area (16) of the lanes and / or an adjacent article (10n), is removed from the article stream and /or placed in correct position and /or is transported in a direction opposite to the transport direction (TR) and is put back in the mass flow (12) on the conveyor device (2, 3).

13. Method according to one of the claims 7 to 10, wherein an article (10a) and / or an adjacent article (10n) with reduced transport speed (vₐ) is displaced on the transport plane of the conveyor device (2, 3) vertically and / or horizontally to the transporting direction (TR) by the handling device (34) in order to arrange the article (10a, 10n) largely central to the infeed area (16) of the lane (13, 14).

## Revendications

1. Dispositif de transport (1) destiné à transporter des articles (10) dans un flot de masse (11) vers au moins un élément séparateur (15) pour séparer ledit flot de masse (11) en au moins deux couloirs (13, 14), dans lequel ledit élément séparateur (15) fait partie du dispositif de transport et dans lequel audit dispositif de transport (1) est associé, au moins dans une zone de séparation (17, 17*), au moins un dispositif de détection (30) qui est destiné à identifier des articles (10a) dont la vitesse de transport (vₐ) est réduite par rapport à la vitesse de transport (vₘ) des articles (10) transportés dans le flot de masse (11) et/ou à identifier des articles (10b) dont la surface de base (GF_{b}) est différente d'une surface de base (GF) connue d'un article (10) transporté dans le flot de masse (11) et/ou à identifier un manque d'articles dans au moins un couloir (13, 14), et qui est couplé à un dispositif de manipulation (34) destiné à positionner et/ou à enlever des articles (10a, 10b) identifiés par ledit dispositif de détection (30) ou des articles (10n) adjacents, ledit dispositif de manipulation (34) faisant partie du dispositif de transport, **caractérisé par le fait que** ledit dispositif de manipulation (34) comprend des moyens de préhension (38, 39) commandables pour des articles (10a, 10b, 10n) ayant une vitesse de transport (vₐ) réduite, ledit dispositif de transport présentant une unité d'évaluation (32) afin de déplacer lesdits moyens de préhension (38, 39) commandables sur le plan de transport à l'encontre de ou dans une large mesure perpendiculairement à la direction de transport (TR).

2. Dispositif de transport selon la revendication 1, dans lequel ledit au moins un dispositif de détection (30) est agencé au-dessus et/ou à côté d'un plan de transport du dispositif de transport (1).

3. Dispositif de transport selon la revendication 1 ou 2, dans lequel ledit dispositif de détection (30) comprend au moins un capteur pour identifier des articles (10a) ayant une vitesse de transport (vₐ) réduite et/ou pour identifier des articles (10b) dont la surface de base (GF_{b}) est différente de la surface de base (GF) connue d'un article (10) transporté dans le flot de masse (11) et/ou pour identifier un manque d'articles dans au moins un couloir (13, 14).

4. Dispositif de transport selon l'une quelconque des revendications 1 à 3, dans lequel ledit dispositif de manipulation (34) présente au moins un moyen de préhension (38, 39) pour les articles (10a) ayant une vitesse de transport (vₐ) réduite et/ou pour les articles (10b) dont la surface de base (GF_{b}) est différente de la surface de base (GF) connue d'un article (10) transporté dans le flot de masse (11) et/ou d'articles (10n) adjacents.

5. Dispositif de transport selon l'une quelconque des revendications 1 à 4, dans lequel ledit dispositif de manipulation (34) est constitué par un robot, en particulier par un robot portique.

6. Dispositif de transport selon l'une quelconque des revendications 1 à 5, dans lequel ledit dispositif de détection (30) est couplé à une unité d'évaluation (32) pour commander et/ou influencer l'état de déplacement du dispositif convoyeur (2, 3).

7. Procédé d'identification et de positionnement d'articles (10) qui sont convoyés dans un flot de masse (11) sur un dispositif de transport (1) selon la revendication 1 et sont séparés, dans la direction de transport (TR), au moyen d'au moins un élément séparateur (15), en au moins deux couloirs (13, 14), comprenant au moins les étapes suivantes :
• identifier, au moyen d'un dispositif de détection (30), des articles (10a) dont la vitesse de transport (vₐ) est réduite par rapport à la vitesse de transport (vₘ) des articles (10) transportés dans le flot de masse (11) et/ou
• identifier, au moyen d'un dispositif de détection (30), des articles (10b) dont la surface de base (GF_{b}) est différente de la surface de base (GF) connue d'un article (10) transporté dans le flot de masse (11) et/ou
• identifier, au moyen d'un dispositif de détection (30), un manque d'articles (10) dans au moins un couloir (13, 14),
• évaluer les données déterminées,
• commander un dispositif de manipulation (34) pour positionner et/ou enlever les articles (10a, 10b) identifiés au moyen du dispositif de détection (30) ou des articles (10n) adjacents,
• enlever ces articles (10a, 10b, 10n) du flot de masse (11) ou
• modifier l'orientation et/ou la position de ces articles (10a, 10b, 10n).

8. Procédé selon la revendication 7, dans lequel la vitesse de transport (v_{F}) d'un dispositif convoyeur (2, 3) est commandée et/ou modifiée lorsque ledit dispositif de détection (30) identifie un article (10a) ayant une vitesse de transport (vₐ) réduite et/ou identifie un article (10b) dont la surface de base (GF_{b}) est différente de la surface de base (GF) connue d'un article (10) transporté dans le flot de masse (11) et/ou identifie un manque d'articles (10) dans au moins un couloir (13, 14) suivant.

9. Procédé selon la revendication 7 ou 8, dans lequel la vitesse de transport (v_{F}) du dispositif convoyeur (2, 3) est réduite lorsque l'on identifie un article (10a) ayant une vitesse de transport (vₐ) réduite et/ou lorsque l'on identifie un article (10b) dont la surface de base (GF_{b}) est différente de la surface de base (GF) connue d'un article (10) transporté dans le flot de masse (11) et/ou lorsque l'on identifie un manque d'articles (10) dans au moins un couloir (13, 14) suivant, de sorte que le mouvement du dispositif convoyeur (2, 3) est ralenti ou arrêté ou qu'un changement de direction a lieu, et dans lequel le mouvement du dispositif convoyeur (2, 3) sera repris à la vitesse normale de transport (v_{F}) après avoir supprimé la panne.

10. Procédé selon l'une quelconque des revendications 7 à 9, dans lequel le dispositif de détection (30) détecte la vitesse de transport (vₘ, vₐ) d'articles (10, 10a) transportés sur le dispositif convoyeur (2, 3) et/ou la surface de base (GF, GF_{b}) des articles (10, 10a, 10b) et/ou le manque d'articles (10) dans au moins un couloir (13, 14) suivant, et détermine l'écart par rapport à la vitesse de transport (vₘ, v_{F}) connue définie et/ou par rapport à la surface de base (GF, GFₐ) définie connue et/ou ledit article (10a) bloquant, et commande de manière correspondante ledit dispositif de manipulation (34).

11. Procédé selon l'une quelconque des revendications 7 à 10, dans lequel ledit article (10a) ayant une vitesse de transport (vₐ) réduite et/ou ledit article (10b) dont la surface de base (GF_{b}) est différente de la surface de base (GF) connue d'un article (10) transporté dans le flot de masse (11) et/ou ledit article (10a) bloquant l'entrée de couloir (16) et/ou un article (10n) adjacent est sorti dans le flot d'articles et est placé dans un dispositif de stockage (40, 42) ou un dispositif de triage (44).

12. Procédé selon l'une quelconque des revendications 7 à 10, dans lequel ledit article (10a) ayant une vitesse de transport (vₐ) réduite et/ou ledit article (10b) dont la surface de base (GF_{b}) est différente de la surface de base (GF) connue d'un article (10) transporté dans le flot de masse (11) et/ou ledit article (10a) bloquant l'entrée de couloir (16) et/ou un article (10n) adjacent est sorti dans le flot d'articles et/ou est mis en position exacte et/ou est transporté à l'encontre de la direction de transport (TR) et placé à nouveau, sur le dispositif convoyeur (2, 3), dans le flot de masse (12).

13. Procédé selon l'une quelconque des revendications 7 à 10, dans lequel un article (10a) et/ou un article (10n) adjacent ayant une vitesse de transport (va) réduite est déplacé, par ledit dispositif de manipulation (34), verticalement et horizontalement par rapport à la direction de transport (TR) sur le plan de transport du dispositif convoyeur (2, 3) afin de disposer ledit article (10a, 10n) dans une largement mesure de manière centrale par rapport à l'entrée de couloir (16) du couloir (13, 14).
